# EUROPEAN PATENT APPLICATION

(11) **EP 1 248 477 A1**
(43) Date of publication of application: **09.10.2002**
(21) Application number: 01108397.9
(22) Date of filing: 03.04.2001
(51) Int. Cl.: H04Q 7/36, H04L 12/28

(54) **Method and device for controlling dynamic frequency selection within a wireless communication system**

(71) Applicant: Telefonaktiebolaget L M Ericsson (Publ), 126 25 Stockholm (SE)
(72) Inventor: Zimmermann, Gerd, 90542 Eckental (DE); Pauli, Mathias, 90427 Nürnberg (DE); Schramm, Peter, 91058 Erlangen (DE); Khun-Jush, Jamshid, 90427 Nürnberg (DE); Gafvels, Lennart, 16739 Solna (SE); Malmgren, Göran, 14171 Huddinge (SE)
(74) Representative: Schmidt, Steffen J., Dipl.-Ing.

(57) **Abstract**

The invention relates to a method and a device for controlling frequency selection within a wireless communication system in response to radar-like interference signals. The method comprises continuously or quasi-continuously monitoring and assessing a plurality of frequencies with respect to a radar-like interference signal and allocating a quality parameter to each assessed frequency, the quality parameter indicating the probability that the frequency is occupied. The method further comprises selecting one or more frequencies in dependence on the allocated quality parameters.

## Description

### BACKGROUND OF THE INVENTION

### Technical Field

The present invention relates to the field of controlling a wireless communication system like a WLAN or HIPERLAN/2 system and in particular to a method and a device for controlling frequency selection within a wireless communication system in response to radar-like interference signals.

### Discussion of the Prior Art

The expression HIPERLAN stands for High Performance Radio Local Area Network. HIPERLAN/2 (H/2) is a standard for high speed radio communication with typical data rates up to 54 Mbit/s.

A H/2 network consists typically of a number of access points (AP). Each AP covers a certain geographic area. Together the APs form a radio access network with full or partial coverage of an area of almost any size. Each AP serves a number of mobile terminals (MT) which are associated to it. In the case where the quality of the radio link degrades to an unacceptable level, the MT may move to another AP by performing a handover.

Another operational mode is used to operate H/2 as an adhoc network without relying on a cellular network infrastructure. In this case a central control (CC), which is dynamically selected among the MTs, provides the same support as a fixed. AP.

H/2 systems are intended to be operated in the 5 GHz frequency range. The nominal carrier frequencies of H/2 are allocated in two frequency bands. In the following, the frequency band between 5150 MHz and 5350 MHz will be called the lower frequency band and the frequency band between 5470 MHz and 5720 MHz will be called the upper frequency band. The nominal carrier frequencies within each frequency band are spaced 20 MHz apart.

H/2 systems and other wireless communications systems require dynamic frequency adaption - also called Dynamic Frequency Selection (DFS) - to local interference conditions. The task of DFS is to detect interference from other system in order to avoid co-channel operation with these systems. A possible realization of DFS is to periodically measure the interference on all used and not used frequencies and to control the frequency selection in accordance with the measurement. Thus, when for example a currently used frequency is suddenly disturbed by interference, a new frequency may automatically be selected which is less interfered than the frequency currently in use.

Possible solutions for DFS in wireless communications systems are periodically accomplished measurements during the normal mode of operation. In order to keep the transmission capacity high, measurements should only rarely be accomplished, e.g. a measurement takes place every few seconds. However, under certain circumstances such a measurement strategy does not work satisfactorily because of the following reasons.

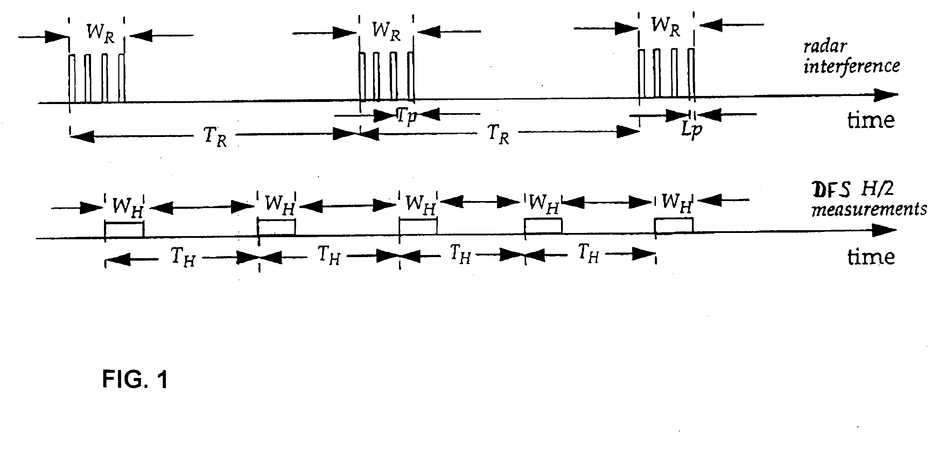

H/2 systems for example must be able to share the upper frequency band with radar systems, some of which are mobile. Typical radar systems use rotating antennas with a small main lobe of approximately 1° for horizontal scanning. Consequently, radar interferences are difficult to detect with DFS measurement strategies. This situation is depicted in Fig. 1, where W_{R} and W_{H} denote the interval length of a radar signal and a H/2 DFS measurement, T_{R} and T_{H} denote the period length of the radar signal detection and the H/2 DFS measurement, T_{P} denotes the period length of the radar signal and L_{P} denotes a radar pulse width.

Taking into account typical interval lengths and typical period lengths of a radar signal and a DFS measurement, the detection of a radar signal is not reliable enough.

There exists, therefore, a need for a method of controlling frequency selection within a wireless communication system in response to radar-like interference signals which allows to implement a highly effective detection strategy. There is also a need for a wireless communication system which performs such a detection strategy.

### BRIEF DESCRIPTION OF THE INVENTION

The existing need is satisfied by a method of controlling frequency selection within a wireless communication system in response to radar-like interference signals which comprises continuously or quasi-continuously monitoring and assessing one or more frequencies with respect to radar-like interference signals, allocating a quality parameter to each assessed frequency, the quality parameter indicating a probability that a frequency is occupied, and selecting one or more transmission frequencies in dependence on the allocated quality parameters. Optionally, a further monitoring of one or more frequencies with respect to at least one of the radar-like interference signals and other interference signals can be performed.

The monitoring of the frequencies is either performed continuously or quasi-continuously to enable a quicker and more reliable detection of radar-like interference signals. A quasi-continuous monitoring comprises a plurality of measurement intervals, wherein the duration of a single measurement interval is long compared to the time interval between two subsequent measurement intervals. The monitoring is performed in order to detect any interference signal present at a specific frequency. A detected interference signal may subsequently be assessed with respect to the question if the detected interference signal is radar-like or not.

Radar-like signals are signals which with a high probability go back to a radar system. Typical radar characteristics which may be taken into account when assessing the one or more frequencies are a rotating antenna (approximately 4 - 20 s, preferably 10 s/360 degree) with a small main lobe (approximately 1 degree), periodic transmission of short pulses (2000 to 3000 pulses/s, each pulse having a pulse length of approximately one ms) and high transmit powers in the order of 26 dBW to 100 dBW. Also, tracking radars are in use which have similar characteristics but do not use a periodically rotating antenna.

Based on the assessment, a quality parameter is allocated to each assessed frequency. The quality parameter may take any value of a preferably predefined set or range of quality parameters. According to a preferred embodiment, the quality parameter comprises more detailed information than a single yes/no answer. Thus the quality parameter may advantageously assume more than two values. According to one option, the quality parameter can assume a plurality of discrete values, e.g. exactly three pre-defined values. The first value indicates that the frequency is occupied because e.g. a radar-like interference signal has been detected. The second value indicates that the frequency is not occupied because e.g. no interference signal could be detected. The third value indicates that the frequency might be occupied because e.g. an interference signal has been detected but it is unclear if the detected interference signal is actually radar-like.

According to a second option, the quality parameter can be defined such that it may assume any value between a low quality border value and a high quality border value. The use of a quality parameter which can assume any value comprised within a predefined and continuous range of values is advantageous because it allows a smooth adaption of e.g. subsequent monitoring steps. The selection of one or more frequencies in dependence on the allocated quality parameters can be performed by means of assessing whether the quality parameter allocated to a specific frequency satisfies a threshold condition.

The continuous or quasi-continuous monitoring and assessing of the plurality of frequencies may take place during normal operation, i.e. concurrently with regular transmission, or prior to normal operation, e.g. during a pre-defined start-up mode. If the monitoring and assessing takes place during a normal transmission mode of the wireless communication system, the system may comprise a separate monitoring device for monitoring the plurality of frequencies with respect to the radar-like interference signals. The monitoring device preferably also performs assessing of the monitored frequencies. Moreover, the monitoring device may be adapted to allocate a quality parameter to each assessed frequency. The monitoring device may be part of an AP or a CC. Alternatively, the monitoring device may be located remote from but in communication with an AP or a CC.

The quality parameters generated within an AP or a CC by means of an internal monitoring device or by means of a software solution can be communicated to further APs or CCs. These further APs or CCs may belong to the same wireless communication system as the component which allocated the quality parameters or to a neighboring wireless communication system. Based on the one or more received quality parameters the receiving AP or CC may select its own frequencies.

According to the invention, the frequencies are selected in dependence on the allocated quality parameters. The selected frequencies may then be subjected to further monitoring. Generally, the further monitoring may relate to at least one of radar-like interference signals and other interference signals. If such interference signals are detected, an additional continuous or quasi-continuous monitoring can be initiated in order to again assess one or more frequencies with respect to the radar-like interference signals and to subsequently allocate corresponding quality parameters to the assessed frequencies.

Alternatively or additionally, the further monitoring can be performed in accordance with DFS and/or be used for transmission purposes. The further monitoring may thus relate to e.g. non-radar-like interference signals or to an assessment of the average quality of the previously selected frequencies, e.g. with respect to the system traffic load or the transmission quality of the currently used transmission frequency. Preferably, the further monitoring comprises periodical short measurements as depicted in Fig. 1 which are generally not suited for radar detection.

It has been mentioned above that the continuous or quasi-continuous monitoring for assessing a plurality of frequencies with respect to radar-like interference signals can be performed during a start-up mode of the wireless communication system prior to a normal transmission mode thereof. Such a start-up mode may comprise selecting the frequencies having a high quality parameter. In a second selection step, which may e.g. comprise DFS, the frequency having the best transmission quality can be selected for transmission purposes. Preferably, transmission is initiated a randomly selected period of time after the periodic monitoring of the selected frequency has started. This allows some APs to measure the interference of neighboring APs e.g. by means of DFS and to react, if necessary, by selecting another frequency. DFS may be enabled prior to, concurrently with or after start of transmission.

Transmission preferably starts in a non-regular transmission mode in order to allow APs or CCs to react on interference with neighboring APs or CCs. Therefore, the normal transmission mode may not be initiated prior to a predefined or a randomly selected period of time after start of the non-regular transmission mode. The start-up mode ends as soon as the H/2 system switches from the non-regular transmission mode to the normal transmission mode.

A predefined period of time after the normal transmission mode has started, the selected transmission frequencies may again be continuously or quasi-continuously monitored and assessed with respect to radar-like signals or other interference signals. The predefined period of time may be different for different transmission frequencies. Preferably, the predefined period of time is selected in dependence on the quality parameter which has previously been allocated to the current transmission frequency. However, the system traffic load or the transmission quality of the currently used transmission frequency may additionally be taken into account.

According to a further embodiment of the invention, the inventive method is applied each time the wireless communication system intends to change from a first transmission frequency to a second transmission frequency. Prior to switching to the second transmission frequency, the second transmission frequency is subjected to the continuous or quasi-continuous monitoring and assessing. Then, a quality parameter is allocated to the assessed second frequency. The second frequency is selected as transmission frequency in dependence on the allocated quality parameter. Subsequently, the second transmission frequency may be subjected to further monitoring with respect to radar-like or other interference signals.

The method outlined above may be implemented by means of a computer program product comprising program code portions for performing individual steps of the method when the product is run on a computer. The computer program product may be stored on a computer readable storage medium.

Also, the method may be implemented by means of a wireless communication system comprising a unit for continuously or quasi-continuously monitoring and assessing one or more frequencies with respect to the radar-like interference signals, a unit for allocating a quality parameter to each assessed frequency, the quality parameter indicating a probability that the frequency is occupied and a unit for selecting one or more frequencies in dependence on the allocated quality parameters.

The system may further comprise a unit for further monitoring one or more of the frequencies with respect to at least one of the radar-like interference signals and other interference signals. The unit for further monitoring may be identical with the unit for continuously or quasi-continuously monitoring the plurality of frequencies. Preferably, at least some of the units of the wireless communication system outlined above are comprised within a monitoring device which is associated with or remote from an AP or a CC.

### BRIEF DESCRIPTION OF THE DRAWINGS

Further advantage of the invention will become apparent from the following description of preferred embodiments of the invention in the light of the accompanying drawings, in which:
- Fig. 1: shows a possible realization of a monitoring strategy of a H/2 system;
- Fig. 2: shows a monitoring strategy of a H/2 system in accordance with the present invention;
- Fig. 3: shows a possible implementation of radar detection and dynamic frequency selection in a H/2 system according to the present invention;
- Fig. 4: shows a first embodiment of a H/2 system according to the present invention;
- Fig. 5: shows a second embodiment of a H/2 system according to the present invention;
- Fig. 6: shows a third embodiment of a H/2 system according to the present invention; and

- Fig. 7: shows a fourth embodiment of a H/2 system according to the present invention.

### DESCRIPTION OF PREFERRED EMBODIMENTS

The invention can be applied to all kinds of wireless communication systems. In the following, the invention is exemplarily described with respect to a H/2 system.

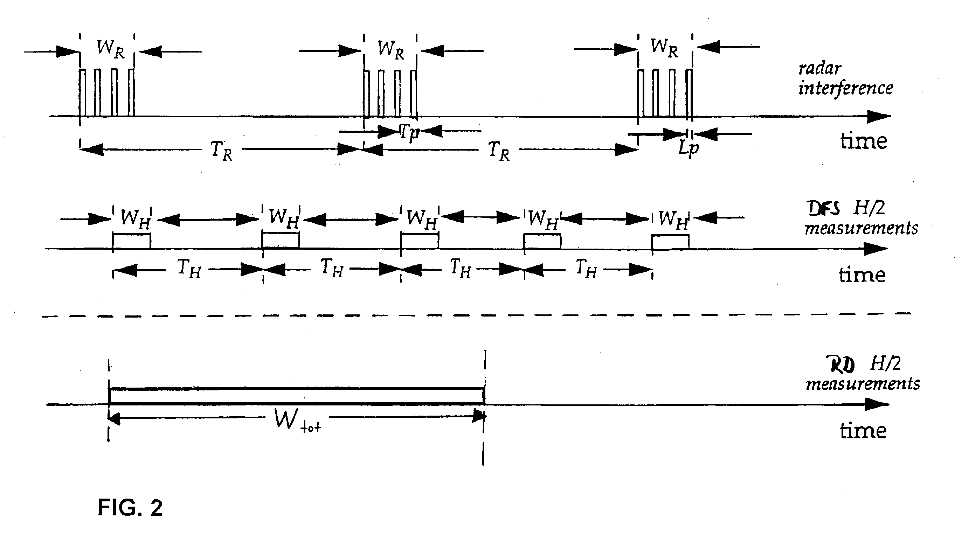

In the lower half of Fig. 2 a continuous monitoring strategy for radar detection (RD) in a H/2 system according to the invention is illustrated. As can be seen, the continuous monitoring consists of a single measurement having an interval length Wₜₒₜ which is large compared to interval lengths of the DFS measurements. Wₜₒₜ is chosen such that it is ensured that at least one periodical radar pulse is received. Typical radar periods are 10 seconds. Thus, Wₜₒₜ should have an extension in the time direction of at least 10 seconds. In order to identify a detected interference signal as periodic interference signal it is advantageous to choose Wₜₒₜ such that at least two and preferably three or more radar pulses can be received. This would enable the H/2 system to make a more reliable distinction between periodic radar-like interference signals and other, non-periodic radar-like interference signals like e.g. interference signals from a tracking radar which will usually be non-periodic.

After a monitoring as depicted in Fig. 2 has been performed for an individual frequency, the result of the monitoring has to be assessed in order to allocate a quality parameter to this frequency.

As a first example, a limited set of quality parameters indicating the probability with which a frequency is occupied can be provided. A first quality parameter (1) indicates that the respective frequency is occupied by radar because a periodic interference signal has been detected. A second quality parameter (0) indicates that the respective frequency is not occupied by radar because neither a periodic nor a non-periodic interference signal has been detected. A third quality parameter (?) indicates that there exists a probability greater than zero that the respective frequency is occupied by radar because e.g. an interference signal has been detected, but it is unclear if the detected interference signal is actually periodic.

Frequencies marked by (0) may subsequently be used as transmission frequencies for the H/2 system. Frequencies marked by (1) or (?) on the other hand may not be allowed to be used. Regardless of the quality parameter allocated to a frequency, the monitoring of all frequencies may subsequently be periodically repeated such that the measurement periods are adapted to the reliability of the allocated quality parameters. Thus, frequencies marked with (?) may be more often monitored than frequencies marked with (0) or (1). Alternatively or additionally, the monitoring period can also be adapted to the overall transmission quality within a H/2 cell.

Instead of defining a discrete set of quality parameters, a more general aspect assigns each frequency f a certain probability P(f). P(f) lies between a low quality border value P1 and a high quality border value P0. P1 and P0 may be adjustable. The introduction of a continuous quality parameter P(f) allows a more detailed assessment whether a frequency is occupied or not.

As an example, P0 may be chosen to equal 0 (no radar-like signal has been detected) and the value of P1 may be chosen to equal 1 (one or more radar-like signals have been detected). A threshold value may be defined to equal 0,1. For each frequency fᵢ to be assessed, a corresponding quality parameter P(fᵢ) is generated and allocated to the frequency fᵢ. If the quality parameter P(fᵢ) of the frequency fᵢ lies below the threshold value of 0,1, the frequency fᵢ may subsequently be selected for further monitoring and/or transmission purposes. If, on the other hand, the quality parameter P(fᵢ) for a specific frequency fᵢ lies above this threshold value, the frequency fᵢ is not selected.

Once a quality parameter P(fᵢ) has been allocated to a frequency fᵢ, the frequency fᵢ may subsequently be subjected to additional periodic measurements. Preferably, the periodicity of the additional measurements is chosen in dependence on the reliability of the quality parameter P(f). This means that many measurements are performed if P(f) has a value of approximately 0,5 and few measurements are performed if P(f) lies in the vicinity of 0 or 1.

The use of P(f) allows a smoother adaption of the monitoring period to the actual interference conditions. The detection of interference signals and the assessment of frequencies with respect to the detected interference signals may be implemented such that the H/2 system searches for small, periodically received pulses. A received pulse may qualify as interference signal if the respective signal level is higher than a certain threshold. Further parameters like the spectrum of the expected radar signal or statistics of other interferences like co-channel interference with higher variance than radar can also be taken into account in order to analyze a specific frequency with respect to radar-like signals.

In order to analyze the detected interference signals for the purpose of allocating the quality parameters, the following strategy can be used. During a monitoring period Wₜₒₜ a number of N RSS (Received Signal Strength) samples are taken. If no RSS sample is above a certain signal threshold which is typical for radar, the frequency is assumed to be not occupied by radar. If at least one RSS sample is above this threshold, this high field strength RSS sample could result from a radar-like signal or any other interference like co-channel interference. It must then be checked if some statistics of the RSS samples like variance, occupied bandwidth, etc. are typical for co-channel interference or radar. Based on this investigation, the channel is finally marked as likely to be used by radar or not.

As pointed out above, this probability can be expresses by P(f) or by one of the markers (0), (1) or (?).

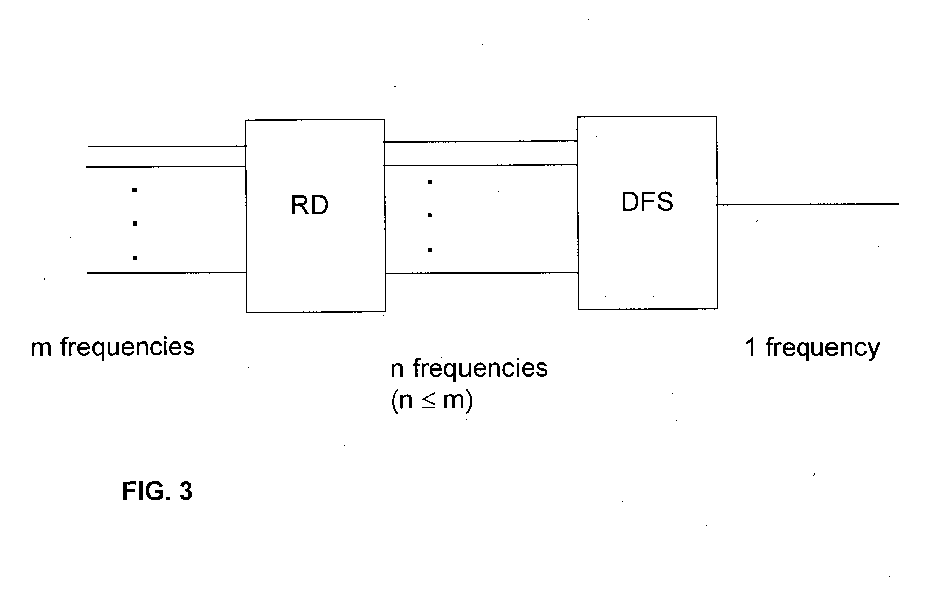

In Fig. 3 a possible implementation of the invention within a H/2 system comprising a radar detection unit RD and a dynamic frequency selection unit DFS is illustrated. The radar detection unit RD performs a continuous or quasi-continuous monitoring with respect to radar-like signals and the dynamic frequency selection unit DFS performs a short-term monitoring with respect to other interference signals resulting from e.g. neighboring H/2 systems. Possible measurement strategies for radar detection and dynamic frequency selection are exemplarily illustrated in Fig. 2.

The radar detection unit RD receives a number of m frequencies to be assessed with respect to radar-like signals. The frequencies assessed by the radar detection unit RD can be constituted by a whole frequency band or by a set of frequencies which were allocated to an individual support provider. Within the radar detection unit RD, a quality parameter P(fᵢ) is allocated to each frequency fᵢ assessed by the radar detection unit RD. Within the radar detection unit RD a first selection takes place and a number of n (n ≤ m) frequencies having a quality parameter P(f) which satisfies a certain threshold condition is input to the dynamic frequency selection unit DFS. The dynamic frequency selection unit DFS assesses the received frequencies with respect to e.g. an average transmission quality and performs a second selection with respect to the frequency being best suited for transmission purposes. This single frequency is subsequently output by the dynamic frequency selection unit DFS and used for transmission purposes.

The method of controlling frequency selection within a H/2 system according to the invention can be implemented during a normal transmission mode of the H/2 system or during a special start-up mode thereof, i.e. prior to normal transmission. In the following, an exemplary four-step start-up mode for a H/2 system is illustrated.

During a first step the frequencies are monitored and assessed with respect to radar-like interference signals. In a second and a third step DFS as depicted in Fig. 1 takes place. In a fourth step the H/2 system is switched to a normal mode of operation. A further step can optionally be defined such that monitoring similar to the first step is periodically repeated every few hours. In the following, the individual steps are discussed in more detail.

Step 1 of the start-up mode is automatically initiated when an AP is switched on. During step 1 no transmission takes place and all frequencies of e.g. the upper frequency band of H/2 are continuously or quasi-continuously monitored and assessed with regard to the result of the monitoring. The monitoring duration depends on the expected period T_{R} of the radar interference. Then, a quality parameter is allocated to each monitored frequency. The measurement on one frequency is immediately aborted as soon as an interfering periodic radar signal has been detected on that frequency with a certain probability. Thus, the start-up time may be reduced. Step 1 may be performed by the radar detection unit RD depicted in Fig. 3.

After all frequencies have been monitored once, the AP continues with step 2. Step 2 may be performed by the dynamic frequency selection unit DFS depicted in Fig. 3.

During step 2, all channels to which a high quality parameter has been allocated (e.g. (0) or a value of P(f) satisfying a predefined threshold condition) are non-continuously but periodically measured. By means of the periodic measurements the average quality of each frequency can be assessed. Since the periodic measurements are very short, periodic interference signals can normally not be detected. The duration T₂ of step 2 is randomly selected within a predefined range of time. By means of the randomly selected duration T₂ it is avoided that several APs, which have been switched on at the same time, switch synchronously from step 2 to step 3. After T₂ has lapsed, the AP automatically selects the frequency with the lowest interference and best quality. The AP then switches to step 3.

In step 3 the AP periodically transmits in a non-regular transmission mode the BCH (Broadcast Channel) on the frequency selected in step 2. Any other transmission within the H/2 system is supressed. No MT is allowed to associate to the AP and to communicate with it. In the remaining part of the MAC(Medium Access Control)-frame between the BCH transmissions, the AP continue to monitor the interference on the frequency selected in step 2 and on the other frequencies. Like in step 2, the monitoring is generally too short for detecting periodic interference signals.

In step 3 DFS is enabled. This means that when the interference on the frequency selected during step 2 increases and gets higher than for another frequency, the AP automatically switches to the next best frequency with the lowest interference. The switching takes into account a predefined hysteresis to avoid too fast toggling between frequencies with similar or almost similar interference.

The duration T₃ of step 3 is preferably fixed. Alternatively, it can be randomly selected within a predefined range of time. After T₃ has lapsed, the AP automatically switches to step 4. Now the advantage of the random duration T₂ of step 2 becomes apparent: Since the APs do not simultaneously switch to step 3, where non-regular transmission is started, some APs can measure the interference from the BCH transmission of neighboring APs and may react by selecting a different transmission frequency. From step 3 the start-up mode continuous with step 4.

Step 4 corresponds to the normal mode of operation. The AP continue transmitting BCH and allow the association of MTs and the communication with them. DFS remains enabled.

According to an optional further step, step 1 is repeated in receive/transmit pauses during the normal mode of operation of the H/2 system. Again, a plurality of frequencies is continuously or quasi-continuously monitored. The repetition interval of the monitoring can be chosen in dependence on the system traffic load and/or the quality parameter previously allocated to the transmission frequency or other frequencies.

Instead of or additionally to implementing the method of the invention in the form of a start-up mode, the method may also be applied during regular operation of a H/2 system such that the method is performed each time a new frequency is selected by an AP or a CC. This means that every time a new frequency is selected (e.g. in accordance with DFS), this newly selected frequency is monitored and assessed and a quality parameter is allocated to this newly selected frequency. A continuous or quasi-continuous monitoring with a comparatively long monitoring duration (corresponding to Wₜₒₜ) is used as previously described. The same measurement and decision procedure as illustrated above with respect to step 1 of the start-up mode can be employed.

When it is decided that the new frequency is already occupied by radar, this frequency is marked with the corresponding quality parameter and will subsequently be avoided by the H/2 system. Thereafter, another frequency is selected out of a list of allowed frequencies; e.g. frequencies to which appropriate quality parameters have been allocated. The selection among the list of allowed frequencies may be performed in accordance with DFS as depicted in Figs. 1 and 2. The allowed frequencies may be ranked based on DFS co-channel interference measurements. The aspect of performing the inventive method prior to switching to a new frequency may advantageously be combined with the start-up mode described above.

During regular operation of a H/2 system, i.e. during regular transmission, receive/transmit pauses can be artificially created in dependence on e.g. a system traffic load and/or the quality parameter allocated to the transmission frequency. During the artificially created receive/transmit pauses further radio detection can be performed. The radio detection performed during the receive/transmit pauses is preferably only performed with respect to the current transmission frequency. The duration of the receive/transmit pauses should not exceed several microseconds in order to maintain a high transmission capability of the H/2 system.

Once an AP or a CC has determined the quality parameters of one or more frequencies, the determined quality parameters may be communicated to neighboring APs or CCs of the same or to APs and CCs of a neighboring H/2 system. This additional information can be used by the respective AP or CC for a more definite decision if a certain frequency is occupied by radar or not. Also, it would generally be sufficient to provide only a single AP or a single CC within a H/2 system with the capability to perform the invention.

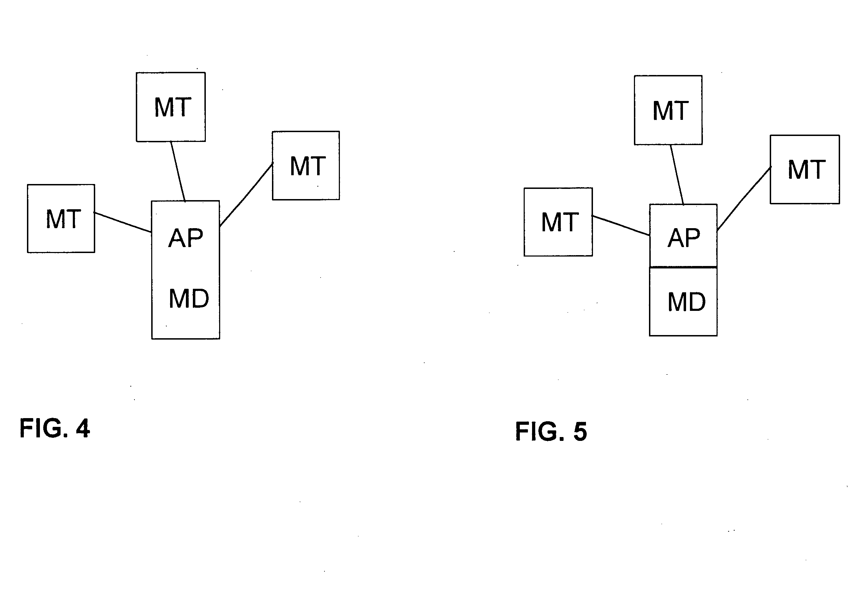

The methods outlined above can be implemented in the firmware of APs or CCs. Thus, no additional hardware for carrying out the invention is required. Alternatively, a separate monitoring device operated as radar detection unit can be included within or attached to an AP or a CC. The monitoring device has the task of monitoring one or more frequencies in order to detect periodic interference signals resulting from a radar system. Additionally, the monitoring device may comprise appropriate functionalities for assessing the frequencies with respect to detected interference signals and for allocating a corresponding quality parameter to each assessed frequency. Several realizations of a H/2 system comprising such a monitoring device are depicted in Figs. 4 to 7.

A first embodiment of a H/2 system comprising a monitoring device MD is depicted in Fig. 4. The H/2 system comprises three MTs and a single AP. The monitoring device MD is included as a software solution within the AP. Such an included monitoring device MD has the disadvantage that it cannot measure when the AP transmits. This means that the monitoring cannot be continuously or quasi-continuously performed during regular transmission of the AP.

According to the H/2 system depicted in Fig. 5, the monitoring device MD is attached as a hardware solution to the AP. The monitoring device MD can be connected to the AP by means of a wired or wireless connection. For example, a radio connection can be provided by means of a separate radio interface (e.g. Bluetooth) or by means of the H/2 air interface already specified for the MT/AP communication.

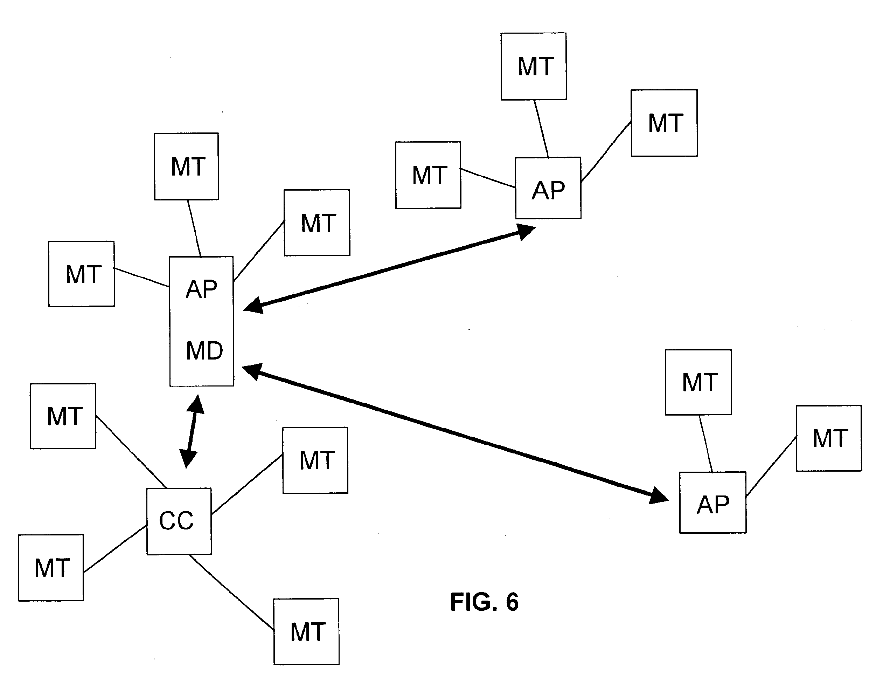

A third embodiment of a H/2 system comprising a monitoring device MD is depicted in Fig. 6. The H/2 system depicted in Fig. 6 comprises four separate cells. A first cell is defined by an AP comprising a monitoring device MD as depicted in Fig. 4. A second and a third cell are defined by APs without monitoring device MD. A fourth cell is defined by a CC.

The individual quality parameters allocated to specific frequencies are communicated from the AP, to which the monitoring device MD is associated, to the three neighboring cells. Thus, the three neighboring cells can profit from the monitoring and assessing performed within the AP in communication with the monitoring device MD. The individual cells may be connected by means of a radio connection.

In Fig. 7, a fourth embodiment of a H/2 system according to he invention is illustrated. The H/2 system depicted in Fig. 7 comprises a monitoring device MD which is arranged a certain distance away from an AP cell and a CC cell. The monitoring device MD communicates with the AP and the CC by means e.g. of a radio connection or a wired link. Since the monitoring device MD is spaced apart from the AP and the CC, the monitoring device MD can perform continuous or quasi-continuous monitoring during transmission of the AP or the CC. This allows a more reliable detection of radar signals during the normal mode of operation of a H/2 system. 6022

## Claims

1. A method of controlling frequency selection in a wireless communication system in response to radar-like interference signals, comprising
a) continuously or quasi-continuously monitoring and assessing one or more frequencies with respect to the radar-like interference signals;
b) allocating a quality parameter to each assessed frequency, the quality parameter indicating a probability that the frequency is occupied;
c) selecting one or more frequencies in dependence on the allocated quality parameters.

2. The method of claim 1, further comprising
d) further monitoring one or more frequencies with respect to at least one of radar-like interference signals and other interference signals.

3. The method of claim 1 or 2,
wherein the quality parameter can assume one of a plurality of pre-defined values, a first value indicating that a frequency is occupied, a second value indicating that a frequency is not occupied, and a third value indicating that a frequency might be occupied.

4. The method according to claim 1 or 2,
wherein the quality parameter can assume any value between a lower quality border value and an upper quality border value.

5. The method according to one of claims 1 to 4,
wherein in step c) only those frequencies are selected to which quality parameters satisfying a threshold condition are allocated.

6. The method according to one of claims 1 to 5,
wherein at least step a) is performed during a normal transmission mode.

7. The method according to one of claims 1 to 5,
wherein at least step a) is performed prior to a normal transmission mode.

8. The method of one of claims 1 to 7,
wherein at least step a) 'is performed by a separate monitoring device (MD) in communication with at least one of an access point (AP) and a central controller (CC) of the wireless communication system.

9. The method of one of claims 1 to 8,
further comprising communicating the allocated quality parameters to an access point (AP) or a central controller (CC) of the same or a neighboring wireless communication system.

10. The method of one of claims 2 to 9,
wherein, when at least one of the radar-like interference signals and other interference signals is detected in step d), steps a) to c) are repeated.

11. The method of one of claims 2 to 10,
wherein step d) comprises periodically monitoring one or more of the selected frequencies to assess an average quality thereof.

12. The method of claim 11,
further comprising transmitting on the one or more frequencies having the highest average quality.

13. The method of claim 12,
wherein after a predefined period of time the method returns to step a).

14. The method of claim 13,
wherein for a specific transmission frequency the predefined period of time is selected in dependence on the quality parameter previously allocated to this transmission frequency.

15. The method of one of claims 13 or 14,
wherein the predefined period of time is selected additionally in dependence on a system traffic load or the transmission quality of the currently used transmission frequency.

16. The method of one of claims 1 to 15, wherein prior to switching from a first transmission frequency to a second transmission frequency, the second transmission frequency is subjected to at least steps a) and b).

17. A computer program product comprising program code portions for performing the steps of claims 1 to 16 when the product is run on a computer.

18. The computer program product of claim 17, stored on a computer readable recording medium.

19. A wireless communication system comprising:
a) a unit for continuously or quasi-continuously monitoring and assessing one or more frequencies with respect to radar-like interference signals;
b) a unit for allocating a quality parameter to each assessed frequency, the quality parameter indicating a probability that a frequency is occupied;
c) a unit for selecting one or more frequencies in dependence on the allocated quality parameters.

20. The wireless communication system of claim 19, comprising a monitoring device (MD) associated with or remote from an access point (AP) or a central controller (CC),
wherein the monitoring device (MD) includes at least the unit for continuously or quasi-continuously monitoring and assessing one or more frequencies with respect to the radar-like interference signals.
